(19) 

Europäisches
Patentamt
European
Patent Office
Office européen
des brevets

(11) **EP 1 583 847 B1**

(12) **EUROPEAN PATENT SPECIFICATION**

(45) Date of publication and mention
of the grant of the patent:
**08.10.2008 Bulletin 2008/41**

(51) Int Cl.:
*C22B 1/10* *(2006.01)*    *C22B 15/00* *(2006.01)*
*B01J 8/18* *(2006.01)*    *F27B 15/02* *(2006.01)*

(21) Application number: **03813564.6**

(22) Date of filing: **10.12.2003**

(86) International application number:
**PCT/EP2003/013984**

(87) International publication number:
**WO 2004/057041 (08.07.2004 Gazette 2004/28)**

(54) **METHOD AND PLANT FOR THE HEAT TREATMENT OF SULFIDIC ORES USING ANNULAR FLUIDIZED BED**

VERFAHREN UND ANLAGE ZUR WÄRMEBEHANDLUNG VON SULFIDISCHEN ERZEN UNTER VERWENDUNG EINER RINGWIRBELSCHICHT

PROCEDE ET INSTALLATION POUR LE TRAITEMENT THERMIQUE DE MINERAIS SULFURES AU MOYEN D'UN LIT FLUIDISE ANNULAIRE

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.12.2002 DE 10260735**

(43) Date of publication of application:
**12.10.2005 Bulletin 2005/41**

(73) Proprietor: **Outotec Oyj**
**02200 Espoo (FI)**

(72) Inventors:
• **STRÖDER, Michael**
**61267 Neu-Anspach (DE)**

• **ANASTASIJEVIC, Nikola**
**63674 Altenstadt (DE)**
• **RUNKEL, Marcus**
**55288 Partenheim (DE)**

(74) Representative: **Lenz, Nanno Matthias**
**Keil & Schaafhausen**
**Patentanwälte**
**Cronstettenstrasse 66**
**D-60322 Frankfurt am Main (DE)**

(56) References cited:
**US-A- 3 578 798**      **US-A- 5 783 158**

## Description

## Technical Field

The present invention relates to a method for the heat treatment of in particular sulfidic ores, in which fine-grained solids are treated at a temperature of 450 to approximately 1500°C in a first fluidized bed reactor, and to a corresponding plant.

Such a method and a plant for the treatment of sulfidic ores containing gold are known for example from DE 196 09 286 A1. In that case, the ore is fluidized in a circulating fluidized bed of a roasting reactor by a gas containing oxygen, with metal sulfides being converted into metal oxides and an exhaust gas containing $SO_2$ being obtained.

Document US 3,578,798 upon which the preamble of claims 1 and 15 is based describes a cyclonic fluid bed reactor comprising a fluidized bed which is fluidized by passing a gaseous fluid upwardly through a perforated annular member. In the centre of the annular fluidized bed created thereby, there is a central tube provided with vertically spaced rows of air inlets 25 tangentially arranged with respect to the inner wall of the central tube and interconnecting a plenum chamber with the interior of the tube. Air entering the plenum chamber will be introduced tangentially into the tube to produce a spiral movement upwardly therethrough. Above the air inlets, the lower portion of the fluidized bed is provided with a plurality of tangentially arranged passages in the tube discharging particle form materials from the fluidized bed into the tube, spiralling upwardly therethrough. The vortiginous motion of the mixture of combustion gases and solids causes the solids to be discharged by outwardly centrifugal force into the upper portion of the freeboard space of the vessel for reintroduction of the solids into the fluidized bed by gravity. The orifice of the tube is above the upper level of the annular fluidized bed.

It is further known to roast sulfidic ores, such as for example zinc blende, in a stationary fluidized bed furnace at temperatures between 500 and 1100°C with air being supplied. In this roasting of zinc blende in a stationary fluidized bed furnace, up to 1000 metric tons of blende per day can be processed.

The energy utilization of the heat treatment achieved when using a stationary fluidized bed is felt to be in need of improvement. One reason for this is that the mass and heat transfer is rather moderate on account of the comparatively low degree of fluidization. Furthermore, in the case of stationary fluidized beds, fine particles are discharged too quickly from the reactor, so that the retention time in the plant is not adequate for a complete reaction. This problem arises especially in the case of circulating fluidized beds due to the higher degree of fluidization, although better mass and heat transfer conditions prevail. Since the sulfidic ores used for the heat treatment, such as for example gold ore, zinc blende or concentrate, become increasingly fine, for example with a grain size fraction below 45 $\mu$m of 75%, an adequate roasting result can only be achieved with difficulty with the known methods and plants.

Moreover, in the case of the known methods and plants, the temperature in the reactor can scarcely be regulated, further impairing the roasting result.

## Description of the Invention

Therefore, it is the object of the present invention to provide a method for the heat treatment of sulfidic ores which can be carried out more efficiently and is distinguished in particular by better roasting results along with good conditions for heat and mass transfer.

In accordance with the invention, this object is achieved by a method comprising the features of claim 1.

In the method of the invention, the advantages of a stationary fluidized bed, such as a longer solids retention time, and the advantages of a circulating fluidized bed, such as a good mass and heat transfer, can surprisingly be combined with each other during the heat treatment, such as for example the roasting of sulfidic ores, while the disadvantages of both systems are avoided. When passing through the upper region of the central tube, the first gas or gas mixture entrains solids from the annular stationary fluidized bed, which is referred to as the annular fluidized bed, into the mixing chamber, so that, due to the high speed differences between the solids and the first gas, an intensively mixed suspension is formed and an optimum heat and mass transfer between the two phases is achieved. By correspondingly adjusting the bed height in the annular fluidized bed as well as the gas velocities of the first gas or gas mixture and of the fluidizing gas, the solids load of the suspension above the orifice region of the central tube can be varied within wide ranges, so that the pressure loss of the first gas between the orifice region of the central tube and the upper outlet of the mixing chamber can be between 1 mbar and 100 mbar. In the case of high solids loading of the suspension in the mixing chamber, a large part of the solids will separate out from the suspension and fall back into the annular fluidized bed. In this way, the temperature in the annular fluidized bed can also be regulated by the amount of heated particles separating out. This recirculation is called internal solids recirculation, the stream of solids circulating in this internal circulation normally being significantly larger than the amount of solids supplied to the reactor from outside. The (smaller) amount of not precipitated solids is discharged from the mixing chamber together with the first gas or gas mixture. The retention time of the solids in the reactor can be varied within a wide range by the selection of the height and cross-sectional area of the annular fluidized bed and be adapted to the desired heat treatment. The amount of solids entrained from the reactor with the gas stream can be completely or at least partly recirculated to the reactor, with the recirculation expediently being fed into the stationary fluidized bed. The stream of solids thus recirculated to the annular fluidized bed normally lies in the same order of magnitude as the stream of solids supplied to the reactor from outside. With the method of the invention, on the one hand a high solids loading and at the same time a particularly good mass and heat transfer can consequently be achieved. Apart from the excellent utilization of energy, another advantage of the method in accordance with the invention consists in the possibility of quickly, easily and reliably adjusting the transfer of energy of the method and the mass transfer to the requirements by changing the flow velocities of the first gas or gas mixture and of the fluidizing gas.

The heat transfer can be further intensified if the reactor is provided downstream with a second reactor, into which a gas mixture laden with solids is introduced from the first reactor. This preferably takes place from below through a, for example central, gas supply tube into a mixing chamber, the gas supply tube being surrounded at least partly by a stationary annular fluidized bed which is fluidized by supplying fluidizing gas. In principle, a single reactor is adequate for performing the method according to the invention. However, the combination of a reactor with a second reactor of a similar type of construction to form a reactor stage allows the overall retention time of the solids in the plant to be increased distinctly.

To ensure a particularly effective heat transfer in the mixing chamber and a sufficient retention time in the reactors, the gas velocities of the first gas mixture and of the fluidizing gas are preferably adjusted for the fluidized bed such that the dimensionless particle Froude numbers ($Fr_P$) are 1.15 to 20, in particular between 3.95 and 11.6, in the central tube, 0.11 to 1.15, in particular between 0.11 and 0.52, in the annular fluidized bed, and/or 0.37 to 3.7, in particular between 0.53 and 1.32, in the mixing chamber. The particle Froude numbers are each defined by the following equation:

$$Fr_p = \frac{u}{\sqrt{\frac{(\rho_s - \rho_f)}{\rho_f} * d_p * g}}$$

with

u = effective velocity of the gas flow in m/s
$\rho_f$ = effective density of the fluidizing gas in kg/m$^3$
$\rho_s$ = density of a solid particle in kg/m$^3$
$d_p$ = mean diameter in m of the particles of the reactor inventory (or the particles forming) during operation of the reactor
g = gravitational constant in m/s$^2$.

When using this equation it should be considered that dp does not indicate the mean diameter ($d_{50}$)

of the material used, but the mean diameter of the reactor inventory formed during the operation of the reactor, which can differ significantly in both directions from the mean diameter of the material used (primary particles). It is also possible for particles (secondary particles) with a mean diameter of 20 to 30 $\mu$m to be formed for instance during the heat treatment from very fine-grained material with a mean diameter of, for example, 3 to 10 $\mu$m. On the other hand, some materials, for example ores, are decrepitated during the heat treatment.

In a development of the idea of the invention, it is proposed to adjust the bed height of solids in the reactor or the reactor stage such that the annular fluidized bed extends beyond the upper orifice end of the central tube by a few centimetres, and thus solids are constantly introduced into the first gas or gas mixture and entrained by the gas stream to the mixing chamber located above the orifice region of the central tube. In this way, there is achieved a particularly high solids loading of the suspension above the orifice region of the central tube.

By means of the method in accordance with the invention, all kinds of sulfidic ores, in particular also those which contain gold, zinc, silver, nickel, copper and/or iron, can be effectively heat-treated. In particular, the method is suitable for the roasting of gold ore or zinc blende. The intensive mass and heat transfer and the adjustable retention time in the reactors allows a particularly high degree of conversion of the roasted material to be achieved.

The generation of the amount of heat necessary for the operation of the reactor can be effected in any way known to the expert for this purpose. According to a preferred embodiment of the present invention, it is provided that, for the roasting, the reactors are supplied with oxygen-containing gas, for example with an oxygen content of approximately 20 vol-%, which is introduced into the annular fluidized beds of the reactors. The gas may be air, air enriched with oxygen or some other oxygen-containing gas. The oxygen-containing gas is preferably introduced into the reactor or the reactors with a temperature of approximately 25 to 50°C. The process of roasting sulfidic ores with excess of oxygen to form metal oxides is exothermal, so that usually no further heat has to be supplied to the reactor or the reactor stage.

The energy utilization can be further improved in the case of the method in accordance with the invention by heat being supplied to or extracted from the first and/or second reactor in the annular fluidized bed and/or in the mixing chamber. Thus, in the case of an exothermal reaction, for example, the generated heat can be used in the reactor for steam generation for example.

A cooling device is preferably provided downstream of the second reactor, in order to cool the solids-laden gas mixture emerging from the reactor to a temperature suitable for the further treatment of below 400°C, in particular to approximately 380°C. This cooling device may also be used for example for generating water vapour, whereby the energy utilization of the overall method is further improved.

A separator, for example a cyclone or the like, may be provided downstream of the reactor stage. The solids separated from exhaust gases can be returned from the separator into the reactor stage, for example into the annular fluidized bed, from one or more reactors, or be passed on to a further cooling device.

The retention time of the solids in the reactor stage can be varied in this way. In addition, the bed height of the solids in one or more reactors can be deliberately adapted to the requirements. The bed height in the annular fluidized bed in this case also influences the temperature established in the annular fluidized bed, since more particles are entrained into the mixing chamber and separated out from it in a heated state when there is a higher bed height. In this way, the temperature in the reactor can be deliberately regulated by the amount of solids recirculated from the separator.

Preferably provided downstream of the separator is a gas cleaning stage with a hot-gas electrostatic precipitator and/or a wet-gas treatment, in which at least part of the exhaust gases separated from the solids in the separator is further cleaned. The cleaned exhaust gases can then be returned, for example as pre-heated fluidizing gas, into the annular fluidized bed of the first and/or second reactor. Part of the exhaust gas separated from the solids in the separator may also be supplied to a plant for producing sulfuric acid. The $SO_2$-containing exhaust gases of the reactor stage can in this way be used for producing a byproduct.

Coarse-grained solids and/or roasting residue are drawn off from the annular fluidized bed of the first and/or second reactor and passed on to a further cooling device, for example a fluidized bed cooler. The discharge of the solids or of the roasting residue may in this case take place discontinuously, whereby the amount of solids in the reactor stage can at the same time be regulated.

A plant in accordance with the invention, which is in particular suited for performing the method described above, comprises the features of claim 15.

Preferably, this gas supply system extends into the mixing chamber. It is, however, also possible to let the gas supply system end below the surface of the annular fluidized bed. The gas is then introduced into the annular fluidized bed for example via lateral apertures, entraining solids from the annular fluidized bed into the mixing chamber due to its flow velocity.

In accordance with a preferred aspect of the invention, the gas supply system has a central tube extending upwards substantially vertically from the lower region of the reactor, which is at least partly surrounded in an annular manner by a chamber in which the stationary annular fluidized bed is formed. The annular fluidized bed does not have to be annular, but rather other forms of the annular fluidized bed are also possible, in dependence on the geometry of the central tube and the reactor, as long as the central tube is at least partly surrounded by the annular fluidized bed.

Of course, two or more central tubes with different or identical dimensions or shapes may also be provided in the reactor. Preferably, however, at least one of the central tubes is arranged approximately centrally with reference to the cross-sectional area of the reactor.

In accordance with a further embodiment of the present invention, the central tube has apertures on its shell surface, for example in the form of slots, so that during the operation of the reactor solids constantly get into the central tube through the apertures and are entrained by the first gas or gas mixture from the central tube into the mixing chamber.

In order to increase the throughput of the plant or the solids retention time, instead of a single reactor there may also be a number of reactors, in particular two, connected to form a reactor stage. The reactors preferably have in each case an annular chamber for a stationary annular fluidized bed and a mixing chamber for the formation of a circulating fluidized bed, the central tube of a downstream reactor being connected to the exhaust-gas outlet of the reactor provided upstream of it.

In accordance with a preferred embodiment, a separator, in particular a cyclone, is provided downstream of the reactor, or the reactor stage, for the separation of solids. The separator may have a solids conduit leading to the annular fluidized bed of the first reactor and/or a solids conduit leading to the annular fluidized bed of a second reactor possibly provided downstream.

If a cooling device is provided downstream of the reactor stage, the solids-laden gas mixture discharged from the reactor stage can be cooled before further treatment to the temperature required for this. A waste-heat boiler provided with banks of cooling tubes may be used for example as the cooling device, it being possible for the banks of cooling tubes to serve at the same time for steam generation.

Furthermore, the temperature required for the heat treatment may be exactly adjusted in the first and/or second reactor by means of temperature-control elements. For this purpose, the reactor may be provided as a natural circulation boiler with cooling elements and membrane walls.

To provide for a reliable fluidization of the solids and the formation of a stationary fluidized bed, provided in the annular chamber of the first reactor and/or the further reactors is a gas distributor which divides the chamber into an upper fluidized bed region and a lower gas distributor chamber. The gas distributor chamber is connected to a supply conduit for fluidizing gas. Instead of the gas distributor chamber, a gas distributor composed of tubes may also be used.

Preferably, the separator of the reactor or of the reactor stage is connected to a supply conduit leading into the annular chamber of a reactor, so that the exhaust gas, possibly further cleaned beforehand, can be used as a pre-heated fluidizing gas.

As an alternative or in addition to this, a dedusting device and/or a plant for producing sulfuric acid may be provided downstream of the separator of the reactor or of the reactor stage.

In the annular fluidized bed and/or the mixing chamber of the reactor, means for deflecting the solids and/or fluid flows may be provided in accordance with the invention. It is for instance possible to position an annular weir, whose diameter lies between that of the central tube and that of the reactor wall, in the annular fluidized bed such that the upper edge of the weir protrudes beyond the solids level obtained during operation, whereas the lower edge of the weir is arranged at a distance from the gas distributor or the like. Thus, solids raining out of the mixing chamber in the vicinity of the reactor wall must first pass by the weir at the lower edge thereof, before they can be entrained by the gas flow of the central tube back into the mixing chamber. In this way, an exchange of solids is enforced in the annular fluidized bed, so that a more uniform retention time of the solids in the annular fluidized bed is obtained.

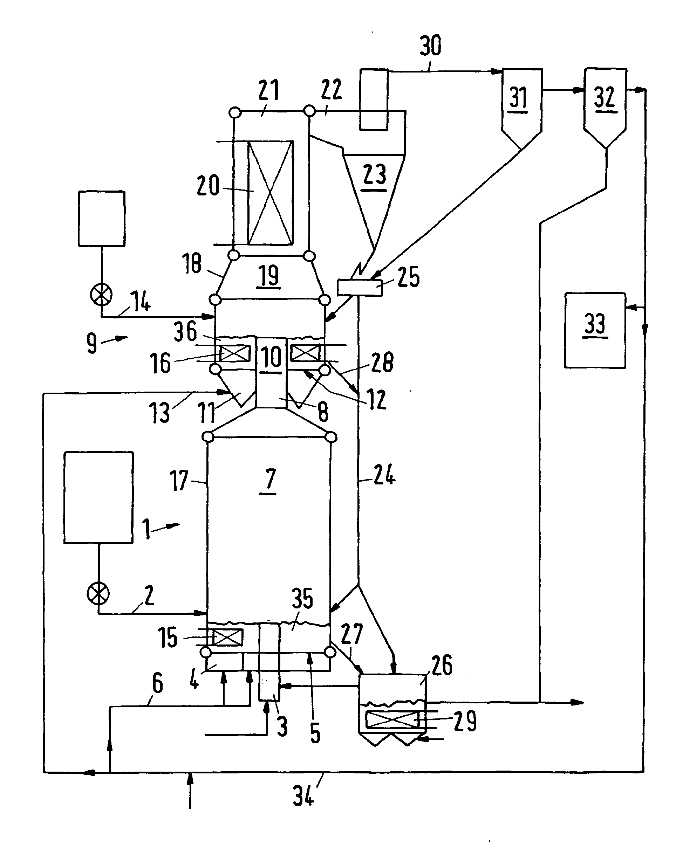

Developments, advantages and application possibilities of the invention also emerge from the following description of an exemplary embodiment and the drawing. All features described and/or illustrated in the drawing form the subject-matter of the invention per se or in any combination, independently of their inclusion in the claims or their back-reference.

**Brief Description of the Drawings**

The single figure shows a process diagram of a method and a plant in accordance with an exemplary embodiment of the present invention.

**Detailed Description of a Preferred Embodiment**

In the method shown in the figure, which is in particular suited for the heat treatment of sulfidic ores, solids are introduced into a first reactor 1 via a supply conduit 2. The reactor 1, which is cylindrical for example, has a central tube 3, which is arranged approximately coaxially with the longitudinal axis of the reactor and extends substantially vertically upwards from the bottom of the reactor 1.

Provided in the region of the bottom of the reactor 1 is an annular gas distributor chamber 4, which is closed off at the top by a gas distributor 5 having apertures. A supply conduit 6 opens out into the gas distributor chamber 4. Arranged in the vertically upper region of the reactor 1, which forms a mixing chamber 7, is a discharge conduit 8, which opens out into a second reactor 9.

The second reactor 9 is largely similar in construction to the first reactor 1. Extending from the bottom of the reactor 9 substantially vertically upwards is a central tube 10, which is connected to the discharge conduit 8 of the first reactor 1 and is arranged approximately coaxially with the longitudinal axis of the reactor 9.

Provided in the region of the bottom of the reactor 9 is an annular gas distributor chamber 11, which is closed off at the top by a gas distributor 12 having apertures. A supply conduit 13 opens out into the gas distributor chamber 11. A further supply conduit 14 is provided for introducing solids into the reactor 9 during the starting-up of the plant.

Temperature-control elements 15 and 16, which are for example flowed through by water, are arranged above the gas distributors 5 and 12, respectively, of the two reactors. In addition, the walls of the reactors 1 and 9 are formed as membrane walls 17 and 18, respectively, which are connected to further temperature-control elements which are not represented in the figure and are for example flowed through by water. In this way, the reactors form a so-called natural circulation boiler.

Arranged in the vertically upper region of the second reactor 9, which forms a mixing chamber 19, is a waste-heat boiler 21 provided with banks of cooling tubes 20. Via a conduit 22, the waste-heat boiler 21 is in connection with a separator, which is formed as a cyclone 23. A solids conduit 24 returns the solids from a floating tank 25, provided downstream of the cyclone 23, into the reactors 1 or 9 or supplies the solids to a further cooling device 26. Arranged above the gas distributors 5 and 12 of the two reactors are discharge conduits 27 and 28 for coarse-grained solids and/or roasting residue, which are connected to the further cooling device 26. The cooling device 26 is formed as a fluidized bed cooler, in which the stream of product is subjected to fluidizing air and cooled by a cooling element 29.

Via a conduit 30, the exhaust gas separated from the solids from the cyclone 23 is supplied to a gas cleaning stage, which has a hot-gas electrostatic precipitator 31 and wet-gas cleaning 32. The dedusted exhaust gas can either be passed on to a plant 33 for the production of sulfuric acid and/or via conduit 34 as fluidizing gas into the reactors 1 and 9 via conduits 6 and 13, respectively. Further gas, which may also be a different gas, may in this case be supplied to the fluidizing gas after cleaning.

During operation of the plant, solids are introduced into the reactor 1 via the supply conduit 2, so that a layer annularly surrounding the central tube 3, which is referred to as an annular fluidized bed 35, forms on the gas distributor 5. Fluidizing gas introduced into the gas distributor chamber 4 through the supply conduit 6 flows through the gas distributor 5 and fluidizes the annular fluidized bed 35, so that a stationary fluidized bed is formed. The velocity of the gases supplied to the reactor 1 is adjusted such that the particle Froude number in the annular fluidized bed 35 is approximately 0.11 to 0.52.

By supplying further solids into the annular fluidized bed 35, the level of the solids in the reactor 1 increases to the extent that solids enter the orifice of the central tube 3. At the same time, a gas or gas mixture is also introduced into the reactor 1 through the central tube 3. The velocity of the gas supplied to the reactor 1 is preferably adjusted such that the particle Froude number in the central tube 3 is approximately 3.95 to 11.6 and in the mixing chamber 7 approximately 0.53 to 1.32. Due to these high gas velocities, the gas flowing through the central tube 3 entrains solids from the stationary annular fluidized bed 35 into the mixing chamber 7 when passing through the upper orifice region.

Due to the banking of the level of the annular fluidized bed 35 as compared to the upper edge of the central tube 3, solids flow over this edge into the central tube 3, whereby an intensively mixed suspension is formed. The upper edge of the central tube 3 may be straight, corrugated or indented or have lateral apertures. As a result of the reduction of the flow velocity by the expansion of the gas jet and/or by impingement on one of the reactor walls, the entrained solids in the mixing chamber 7 quickly lose speed and partly fall back again into the annular fluidized bed 35. The amount of not precipitated solids is discharged from the reactor 1 together with the gas stream via the conduit 8 and passed into the reactor 9. Between the reactor regions of the stationary annular fluidized bed 35 and the mixing chamber 7 there is thereby obtained a solids circulation which ensures a good heat transfer.

Before further processing, the solids discharged via the conduit 8 are treated in the second reactor 9 in the way explained above with reference to reactor 1, so that a stationary fluidized bed 36 is likewise formed above the gas distributor 12 in the reactor 9 by solids separating out from the mixing chamber 19. Moreover, the dust separated in the hot-gas electrostatic precipitator 31 is returned via a recirculating conduit into the stationary annular fluidized bed 36 of the second reactor 9. The particle Froude numbers in the second reactor 9 correspond approximately to those of the first reactor 1.

The bed height of the solids in the reactors 1 and 9 is regulated not only by the supply of solids via conduit 2 but also firstly by means of the amount of solids returned from the cyclone 23 into the reactors and moreover by means of the amount of solids extracted from the reactors via conduits 27 or 28.

The solids removed from the cyclone 23 and/or directly from the reactors 1 and 9 are cooled in the fluidized bed cooler 26 to a temperature suitable for the further processing. After cleaning in the hot-gas electrostatic precipitator 31 and the wet-gas cleaning 32, the exhaust gas separated from the solids in the cyclone 23 can be partly supplied to the reactors as pre-heated fluidizing gas or to the sulfuric acid plant 33.

The invention will be described below with reference to two examples demonstrating the inventive idea, but not restricting the same.

## Example 1 (roasting of gold ore)

In a plant corresponding to the figure, 1200 kg/h of ground, dried and classified gold ore with a gold content of approximately 5 ppm, i.e. 5 g/t, and a maximum grain fraction of 50 $\mu$m, containing

1.05 wt-% organic carbon
19.3 wt-% $CaCO_3$
12.44 wt-% $Al_2O_3$
2.75 wt-% $FeS_2$
64.46 wt-% inert substances (for example $SiO_2$),

were supplied in continuous operation to the reactor 1, the upper part of which had a diameter of 800 mm. Furthermore, 2500 $Nm^3$/h of air with a temperature of 520°C were introduced into the reactor 1 via the central tube 3 and via conduit 6 as fluidizing gas. The particle Froude number was in this case between 3.95 and 6.25 in the central tube 3, between 0.84 and 1.32 in the mixing chamber 7 and between 0.32 and 0.52 in the annular fluidized bed 35.

The retention time of the gold ore in the reactor 1 was between 5 and 10 minutes, with a temperature of between 600 and 780°C being established in the reactor. 0.5 to 6.0 vol-% of residual oxygen were measured in the exhaust gas. The content of organic carbon in the product after the heat treatment was below 0.1%.

## Example 2 (roasting of zinc blende)

In a plant corresponding to the figure, 42 t/h of zinc blende with a temperature of approximately 25°C were supplied to the reactor 1 from a charging bunker with a capacity of about 200 m³ via conduit 2 and a dosing device into the annular fluidized bed 35. At the same time, approximately 16,600 $Nm^3$/h of air with a temperature of 47°C and a pressure of approximately 1.2 bar, containing

77.1 vol-% N
20.4 vol-% $O_2$
2.5 vol-% $H_2O$,

were introduced via conduit 6 to the annular fluidized bed. Approximately 60,200 $Nm^3$/h of air and additionally 3000 $Nm^3$/h of exhaust cooler air from the fluidized bed cooler 26 with a temperature of 150°C were passed through the central tube 3 to the reactor 1, so that the total amount of air passed to the central tube 3 was approximately 63,200 $Nm^3$/h. The air had a temperature of 35°C and a pressure of 1.07 bar and contained

77.1 vol-% N
20.4 vol-% $O_2$
2.5 vol-% $H_2O$.

The particle Froude number was in this case between 4.4 and 11.6 in the central tube 3, between 0.53 and 1.15 in the mixing chamber 7 and between 0.11 and 0.3 in the annular fluidized bed 35. The reaction of the sulfidic zinc blende with the free oxygen of the fluidizing air to form metal oxide caused a temperature of 930°C to be established in the reactor 1. At the same time, approximately 15.4 MW of heat were extracted from the reactor 1 via the cooling element 15 and the membrane wall 17 and used to generate saturated steam from cooling water. The temperature in the region of the conduit 8 at the outlet of the reactor 1 was thereby lowered to 800°C. To avoid an enrichment of coarse material in the reactor 1, approximately 0.16 t/h of product with a temperature of 901°C were extracted from the annular fluidized bed 35 in discontinuous operation via conduit 27 as coarse-grained run-off and passed to the fluidized bed cooler 26.

A solids-laden gas mixture with a pressure of 1.049 bar comprising 110.9 t/h of solids and approximately 79,600 $Nm^3$/h of exhaust gas, containing

12.1 vol-% $SO_2$
77.2 vol-% N
2.5 vol-% $O_2$
8.2 vol-% $H_2O$,

were passed to the central tube 10 of the second reactor 9 via conduit 8. Furthermore, approximately 17,350 $Nm^3$/h of air with a temperature of 43°C at a pressure of approximately 1.18 bar, containing

77.1 vol-% N
20.4 vol-% $O_2$
2.5 vol-% $H_2O$,

were supplied to the reactor 9 via conduit 13 for fluidization. During start-up operation, 5 t/h of solids with a temperature of 25°C were at the same time charged to the reactor 9 via conduit 14. The solids-laden gas mixture was cooled to 480°C in the mixing chamber 19 of the reactor 9, with a total of approximately 23.6 MW of heat being removed from the reactor 9 by the cooling element 16, the membrane wall 18 and the waste-heat boiler 21 and used to generate saturated steam from cooling water. The cooling element 16 was in this case used as a steam superheater with a superheating temperature of 400°C.

Approximately 96,200 $Nm^3$/h of solids-laden gas mixture with a temperature of 380°C and a pressure of 1.018 bar, which was laden with 213.5 t/h of solids and had the following composition:

9.4 vol-% $SO_2$
77.8 vol-% N
5.5 vol-% $O_2$
7.3 vol-% $H_2O$

were removed from the reactor 9 via conduit 22.

In the cyclone 23, the exhaust gas was separated from the solids to the extent that approximately 96,200 $Nm^3$/h of air with a dust content of 50 g/$Nm^3$ (4.81 t/h of solids) were passed on to the hot-gas electrostatic precipitator 31 via conduit 30. There, the exhaust gas was dedusted to a dust content of 50 mg/$Nm^3$ and passed on to the wet-gas cleaning 32 and the downstream sulfuric acid plant 33.

From the cyclone 23, approximately 208 t/h of solids with a temperature of 380°C were passed firstly to the floating tank 25, serving as a buffer vessel, and divided in such a way that 76.2 t/h were passed into the annular fluidized bed 35 of the first reactor 1, approximately 100.9 t/h into the annular fluidized bed 36 of the second reactor 9 and 31 t/h into the fluidized bed cooler 26.

In this way it was possible for the bed height of the annular fluidized beds 35 and 36, respectively forming in the two reactors 1 and 9, to be adjusted to approximately 1 m. The solids were then cooled in the fluidized bed cooler 26 by the cooling element 29 to a temperature of below 150°C, with an amount of heat of approximately 1.7 MW being removed. As a result, a total of approximately 40.8 MW were removed from the plant and converted into 55.2 t/h of superheated steam with a pressure of 40 bar and a temperature of 400°C.

The product discharged from the fluidized bed cooler 26 was mixed with approximately 4.8 t/h of solids with a temperature of approximately 380°C, which were separated from the exhaust gas of the cyclone 30 by the hot-gas electrostatic precipitator 31. The stream of product discharged altogether from the plant was consequently approximately 36.54 t/h at a temperature of approximately 182°C.

In this way it was possible for even zinc blende or a zinc blende concentrate with a grain size fraction below 45 $\mu$m of 75% to be roasted in the plant in such a way that the end product contained 0.3 wt-% of sulfide sulfur and 1.8 wt-% of sulfate sulfur.

**List of Reference Numerals:**

| | |
|---|---|
| 1 | (first) reactor |
| 2 | (solids) supply conduit |
| 3 | central tube (gas supply tube) |
| 4 | gas distributor chamber |
| 5 | gas distributor |
| 6 | (gas) supply conduit |
| 7 | mixing chamber |
| 8 | conduit |
| 9 | (second) reactor |
| 10 | central tube (gas supply tube) |
| 11 | gas distributor chamber |
| 12 | gas distributor |
| 13 | (gas) supply conduit |
| 14 | (solids) supply conduit |
| 15 | temperature-control element |
| 16 | temperature-control element |
| 17 | membrane wall |
| 18 | membrane wall |
| 19 | mixing chamber |
| 20 | bank of cooling tubes |
| 21 | waste-heat boiler |

22    conduit
23    cyclone
24    conduit
25    floating tank
26    fluidized bed cooler
27    conduit
28    conduit
29    cooling element
30    conduit
31    hot-gas electrostatic precipitator
32    wet-gas cleaner
33    plant for producing sulfuric acid
34    conduit
35    annular fluidized bed
36    annular fluidized bed

**Claims**

1.  A method for the heat treatment of in particular sulfidic ores, in which fine-grained solids are treated at a temperature of 450 to approximately 1500°C in a fluidized bed reactor (1), wherein a first gas or gas mixture is introduced from below through a preferably central gas supply tube (3) into a mixing chamber (7) of the reactor (1), the gas supply tube (3) being at least partly surrounded by a stationary annular fluidized bed (35) which is fluidized by supplying fluidizing gas, **characterized in that** the gas velocities of the first gas or gas mixture as well as of the fluidizing gas for the annular fluidized bed (35) are adjusted such that the particle Froude numbers in the gas supply tube (3) are between 1 and 100, in the annular fluidized bed (35) between 0.02 and 2 and in the mixing chamber (7) between 0.3 and 30.

2.  The method as claimed in claim 1, **characterized in that** the reactor (1) is provided downstream with a second reactor (9), into which a gas mixture laden with solids is introduced from the first reactor (1) from below through a preferably central gas supply tube (10) into a mixing chamber (19), the gas supply tube (10) being surrounded at least partly by a stationary annular fluidized bed (36) which is fluidized by supplying fluidizing gas.

3.  The method as claimed in claim 1 or 2, **characterized in that** the particle Froude number in the gas supply tube (3, 10) is between 1.15 and 20, in particular between 3.95 and 11.6.

4.  The method as claimed in any of the preceding claims, **characterized in that** the particle Froude number in the annular fluidized bed (35, 36) is between 0.11 and 1.15, in particular between 0.11 and 0.52.

5.  The method as claimed in any of the preceding claims, **characterized in that** the particle Froude number in the mixing chamber (7, 19) is between 0.37 and 3.7, in particular between 0.53 and 1.32.

6.  The method as claimed in any of the preceding claims, **characterized in that** the bed height of solids in each reactor (1, 9) is adjusted such that the annular fluidized bed (35, 36) extends beyond the upper orifice end of the gas supply tube (3, 10) and that solids are constantly introduced into the first gas or gas mixture and entrained by the gas stream to the mixing chamber (7, 19) located above the orifice region of the gas supply tube (3, 10).

7.  The method as claimed in any of the preceding claims, **characterized in that** a sulfidic ore, which contains gold, zinc, silver, copper, nickel and/or iron, is used as the starting material.

8.  The method as claimed in any of the preceding claims, **characterized in that** at least one reactor (1, 9) is supplied with oxygen-containing gas, for example air with an oxygen content of approximately 20 vol-% through the gas supply tube (3, 10) and/or into the annular fluidized bed (35, 36).

9.  The method as claimed in any of the preceding claims, **characterized in that** heat is supplied to or extracted from at least one reactor (1, 9) in the annular fluidized bed (35, 36) and/or in the mixing chamber (7, 19).

10.  The method as claimed in any of the preceding claims, **characterized in that** provided downstream of at least one reactor (1, 9) is a cooling device (20, 21), in which a solids-laden gas mixture from the reactor (1, 9) is cooled to a temperature of below 400°C, in particular to approximately 380°C.

11.  The method as claimed in any of the preceding claims, **characterized in that** provided downstream of at least one reactor (1, 9) is a separator, for example a cyclone (33), from which solids separated from exhaust gases are supplied to the first and/or second reactor (1, 9) or to a further cooling device (26).

12.  The method as claimed in claim 11, **characterized in that** at least part of the exhaust gases separated from the solids in the separator (23) is supplied to the first and/or the second reactor (1, 9) as fluidizing gas, in particular after treatment in a downstream gas cleaning stage, such as a hot-gas electrostatic precipitator (31) and/or a wet-gas treatment (32).

13.  The method as claimed in claim 11 or 12, **characterized in that** at least part of the exhaust gases separated from the solids in the separator (23) is supplied to a plant (33) for producing sulfuric acid.

14. The method as claimed in any of the preceding claims, **characterized in that** coarse-grained solids and/or roasting residue are drawn off, in particular discontinuously, from the annular fluidized bed (35, 36) of the first and/or second reactor (1, 9) and passed on to a further cooling device (26).

15. A plant for the heat treatment of fine-grained solids, in particular sulfidic ores, in particular for performing a method as claimed in any of claims 1 to 14, comprising a reactor (1) constituting a fluidized bed reactor, wherein the reactor (1) has a gas supply system with annular gas distributor (4,5) and at least one gas supply tube (3) extending through a stationary annular fluidized bed (35) which at least partly surrounds the gas supply tube, **characterized in that** the level of the annular fluidized bed (35) is banked such that solids flow over the edge of the gas supply tube (3) and **in that** the gas supply tube (3), extending upwards substantially vertically from a lower region of the reactor (1) into a mixing chamber (7) of the reactor (1), is adapted for supplying a vertically directed flow of gas, such that gas flowing through the gas supply tube (3) entrains solids from the annular fluidized bed (35) into the mixing chamber (7).

16. The plant as claimed in claim 15, **characterized in that** the reactor (1) is provided downstream with a second reactor (9), which has a gas supply tube (10), which is connected to a discharge conduit (8) for solids-laden gas mixtures provided at the upper end of the first reactor (1) and is formed such that gas flowing through the gas supply tube (10) entrains solids from a stationary annular fluidized bed (36), which at least partly surrounds the gas supply tube (10), into the mixing chamber (19).

17. The plant as claimed in claim 15 or 16, **characterized in that** the gas supply tube (3, 10) is arranged approximately centrally with reference to the cross-sectional area of the reactor (1).

18. The plant as claimed in claim 17, **characterized in that** a solids separator, in particular a cyclone (23), is provided downstream of the second reactor (9), for the separation of solids, and that the solids separator has a solids conduit (24) leading to the annular fluidized bed (35, 36) of the first and/or second reactor (1, 9).

19. The plant as claimed in claim 17 or 18, **characterized in that** a cooling device, in particular a waste-heat boiler (21) provided with banks of cooling tubes (20), is provided downstream of the second reactor (9).

20. The plant as claimed in any of claims 17 to 19, **characterized in that** temperature-control elements (15, 16), in particular a natural circulation boiler with cooling elements and membrane walls (17, 18), are provided in the first and/or second reactor (1, 9).

21. The plant as claimed in any of claims 17 to 20, **characterized in that** a gas distributor (5, 12) which divides the annular chamber into an upper fluidized bed region and a lower gas distributor chamber (4, 11) is provided in the first and/or second reactor (1, 9), and that the gas distributor chamber (4, 11) is connected to a supply conduit (6, 13) for fluidizing gas.

22. The plant as claimed in any of claims 18 to 21, **characterized in that** the first and/or second reactor (1, 9) has a supply conduit which leads to the annular chamber and is connected to an exhaust-gas conduit of the separator (23) provided downstream of the second reactor (9).

23. The plant as claimed in any of claims 18 to 22, **characterized in that** a dedusting device (31, 32) and/or a plant (33) for producing sulfuric acid is provided downstream of the separator (23).

## Patentansprüche

1. Ein Verfahren zur Wärmebehandlung von insbesondere sulfidischen Erzen, bei dem Feststoffe in einem Reaktor (1) mit Wirbelbett bei einer Temperatur von 450 bis etwa 1500° C behandelt werden, wobei ein erstes Gas oder Gasgemisch von unten durch ein vorzugsweise zentrales Gaszufuhrrohr (3) in eine Wirbelmischkammer (7) des Reaktors (1) eingeführt wird, wobei das Gaszufuhrrohr (3) wenigstens teilweise von einer durch Zufuhr von Fluidisierungsgas fluidisierten, stationären Ringwirbelschicht (35) umgeben wird, **dadurch gekennzeichnet, dass** die Gasgeschwindigkeiten des ersten Gases oder Gasgemisches sowie des Fluidisierungsgases für die Ringwirbelschicht (35) derart eingestellt werden, dass die Partikel-Froude-Zahlen in dem Gaszufuhrrohr (3) zwischen 1 und 100, in der Ringwirbelschicht (35) zwischen 0,02 und 2 sowie in der Wirbelmischkammer (7) zwischen 0,3 und 30 betragen.

2. Das Verfahren nach Anspruch 1, **dadurch gekennzeichnet, dass** dem Reaktor (1) ein zweiter Reaktor (9) nachgeschaltet ist, in den ein feststoffbeladenes Gasgemisch aus dem ersten Reaktor (1) von unten durch ein vorzugsweise zentrales Gaszufuhrrohr (10) in eine Wirbelmischkammer (19) eingeführt wird, wobei das Gaszufuhrrohr (10) wenigstens teilweise von einer durch Zufuhr von Fluidisierungsgas fluidisierten, stationären Ringwirbelschicht (36) umgeben wird.

3. Das Verfahren nach Anspruch 1 oder 2, **dadurch gekennzeichnet, dass** die Partikel-Froude-Zahl in dem Gaszufuhrrohr (3, 10) zwischen 1,15 und 20, insbesondere zwischen 3,95 und 11,6, beträgt.

4. Das Verfahren nach einem der vorhergehenden Ansprüche, **dadurch gekennzeichnet, dass** die Partikel-Froude-Zahl in der Ringwirbelschicht (35, 36) zwischen 0,11 und 1,15, insbesondere zwischen 0,11 und 0,52, beträgt.

5. Das Verfahren nach einem der vorhergehenden Ansprüche, **dadurch gekennzeichnet, dass** die Partikel-Froude-Zahl in der Wirbelmischkammer (7, 19) zwischen 0,37 und 3,7, insbesondere zwischen 0,53 und 1,32, beträgt.

6. Das Verfahren nach einem der vorhergehenden Ansprüche, **dadurch gekennzeichnet, dass** der Füllstand an Feststoff in jedem Reaktor (1, 9) so eingestellt wird, dass sich die Ringwirbelschicht (35, 36) über das obere Mündungsende des Gaszufuhrrohrs (3, 10) hinaus erstreckt und dass ständig Feststoff in das erste Gas oder Gasgemisch eingetragen und von dem Gasstrom zu der oberhalb des Mündungsbereichs des Gaszufuhrrohrs (3, 10) befindlichen Wirbelmischkammer (7, 19) mitgeführt wird.

7. Das Verfahren nach einem der vorhergehenden Ansprüche, **dadurch gekennzeichnet, dass** als Ausgangsmaterial ein sulfidisches Erz, das Gold, Zink, Silber, Kupfer, Nickel und/oder Eisen enthält, eingesetzt wird.

8. Das Verfahren nach einem der vorhergehenden Ansprüche, **dadurch gekennzeichnet, dass** zumindest einem Reaktor (1, 9) sauerstoffhaltigen Gas, z.B. Luft mit einem Sauerstoffgehalt von etwa 20 Vol.-% durch das Gaszufuhrrohr (3, 10) und/oder in die Ringwirbelschicht (35, 36) zugeführt wird.

9. Das Verfahren nach einem der vorhergehenden Ansprüche, **dadurch gekennzeichnet, dass** zumindest einem Reaktor (1, 9) in der Ringwirbelschicht (35, 36) und/oder in der Wirbelmischkammer (7, 19) Wärme zugeführt oder entzogen wird.

10. Das Verfahren nach einem der vorhergehenden Ansprüche, **dadurch gekennzeichnet, dass** zumindest einem Reaktor (1, 9) eine Kühleinrichtung (20, 21) nachgeschaltet ist, in welcher ein feststoffbeladenes Gasgemisch aus dem Reaktor (1, 9) auf eine Temperatur von unter 400° C, insbesondere auf etwa 380° C, abgekühlt wird.

11. Das Verfahren nach einem der vorhergehenden Ansprüche, **dadurch gekennzeichnet, dass** zumindest einem Reaktor (1, 9) ein Abscheider, bspw. ein Zyklon (23), nachgeschaltet ist, aus dem von Abgasen getrennte Feststoffe dem ersten und/oder zweiten Reaktor (1, 9) oder einer weiteren Kühleinrichtung (26) zugeführt werden.

12. Das Verfahren nach Anspruch 11, **dadurch gekennzeichnet, dass** zumindest ein Teil der in dem Abscheider (23) von den Feststoffen getrennten Abgase insbesondere nach Behandlung in einer nachgeschalteten Gasreinigungsstufe, wie einem Elektroheißgasfilter (31) und/oder einer Nassgasbehandlung (32), dem ersten und/oder dem zweiten Reaktor (1, 9) als Fluidisierungsgas zugeführt werden.

13. Das Verfahren nach Anspruch 11 oder 12, **dadurch gekennzeichnet, dass** zumindest ein Teil der in dem Abscheider (23) von den Feststoffen getrennten Abgase einer Anlage (33) zur Herstellung von Schwefelsäure zugeführt werden.

14. Das Verfahren nach einem der vorhergehenden Ansprüche, **dadurch gekennzeichnet, dass** aus der Ringwirbelschicht (35, 36) des ersten und/oder zweiten Reaktors (1, 9) grobkörnige Feststoffe und/oder Abbrand insbesondere diskontinuierlich abgezogen und einer weiteren Kühleinrichtung (26) zugeleitet werden.

15. Eine Anlage zur Wärmebehandlung von feinkörnigen Feststoffen, insbesondere sulfidischen Erzen, insbesondere zur Durchführung eines Verfahrens nach einem der Ansprüche 1 bis 14, mit einem als Wirbelschichtreaktor ausgebildeten Reaktor (1), wobei der Reaktor (1) ein Gaszuführungssystem mit einem ringförmigen Gasverteiler (4, 5) und wenigstens einem Gaszufuhrrohr (3) aufweist, welches sich durch eine stationäre Ringwirbelschicht (35) erstreckt, die das Gaszufuhrrohr wenigstens teilweise umgibt, **dadurch gekennzeichnet, dass** das Niveau der Ringwirbelschicht (35) derart überhöht ist, dass Feststoffe über die Kante des Gaszufuhrrohrs (3) überlaufen, und dass das Gaszufuhrrohr (3), das sich vom unteren Bereich des Reaktors (1) aus im Wesentlichen vertikal nach oben bis in eine Mischkammer (7) des Reaktors (1) erstreckt, so ausgestaltet ist, dass es einen vertikal gerichteten Gasstrom so zuführt, dass das durch das Gaszufuhrrohr (3) strömende Gas Feststoffe aus der Ringwirbelschicht (35) in die Mischkammer (7) mitreißt.

16. Anlage nach Anspruch 15, **dadurch gekennzeichnet, dass** dem Reaktor (1) ein zweiter Reaktor (9) nachgeschaltet ist, der ein Gaszufuhrrohr (10) aufweist, welches mit einer am oberen Ende des ersten Reaktors (1) vorgesehenen Ausbringleitung (8) für feststoffbeladene Gasgemische verbunden und derart ausgebildet ist, dass durch das Gaszufuhrrohr (10) strömendes Gas Feststoff aus einer stationären Ringwirbelschicht (36), die das Gaszufuhrrohr (10) wenigstens teilweise umgibt, in die Wirbelmischkammer (19) mitreißt.

17. Anlage nach Anspruch 15 oder 16, **dadurch gekennzeichnet, dass** das Gaszufuhrrohr (3, 10), bezogen auf die Querschnittsfläche des Reaktors (1), in etwa mittig angeordnet ist.

18. Anlage nach Anspruch 17, **dadurch gekennzeichnet, dass** dem zweiten Reaktor (9) ein Feststoffabscheider, insbesondere ein Zyklon (23), zur Abtrennung von Feststoffen nachgeschaltet ist, und dass der Feststoffabscheider eine zu der Ringwirbelschicht (35, 36) des ersten und/ oder zweiten Reaktors (1, 9) führende Feststoffleitung (24) aufweist.

19. Anlage nach Anspruch 17 oder 18, **dadurch gekennzeichnet, dass** dem zweiten Reaktor (9) eine Kühleinrichtung, insbesondere ein mit Kühlbündeln (20) versehener Abhitzekessel (21), nachgeschaltet ist.

20. Anlage nach einem der Ansprüche 17 bis 19, **dadurch gekennzeichnet, dass** in dem ersten und/ oder zweiten Reaktor (1, 9) Temperierelemente (15, 16), insbesondere ein Naturumlaufkessel mit Kühlelementen und Membranwänden (17, 18), vorgesehen sind.

21. Anlage nach einem der Ansprüche 17 bis 20, **dadurch gekennzeichnet, dass** in dem ersten und/ oder zweiten Reaktor (1, 9) ein Gasverteiler (5, 12) vorgesehen ist, welcher die ringförmige Kammer in einen oberen Wirbelbettbereich und eine untere Gasverteilerkammer (4, 11) unterteilt, und dass die Gasverteilerkammer (4, 12) mit einer Zufuhrleitung (6, 13) für Fluidisierungsgas verbunden ist.

22. Anlage nach einem der Ansprüche 18 bis 21, **dadurch gekennzeichnet, dass** der erste und/oder zweite Reaktor (1, 9) eine zu der ringförmigen Kammer führende Zufuhrleitung aufweist, die mit einer Abgasleitung des dem zweiten Reaktor (9) nachgeschalteten Abscheiders (23) verbunden ist.

23. Anlage nach einem der Ansprüche 18 bis 22, **dadurch gekennzeichnet, dass** dem Abscheider (23) eine Entstaubungseinrichtung (31, 32) und/oder eine Anlage (33) zur Herstellung von Schwefelsäure nachgeschaltet ist.

**Revendications**

1. Procédé pour le traitement thermique de minerais sulfureux en particulier, dans lequel des solides de grains fins sont traités à une température de 450 à environ 1500°C dans un réacteur de lit fluidisé (1), dans lequel un premier gaz ou mélange de gaz est introduit par-dessous à travers un tube d'alimentation de gaz de préférence central (3) dans une chambre de mixage (7) du réacteur (1), le tube d'alimentation de gaz (3) étant au moins partiellement entouré d'un lit fluidisé annulaire immobile (35) qui est fluidisé en fournissant du gaz de fluidisation, **caractérisé en ce que** les vitesses de gaz du premier gaz ou mélange de gaz ainsi que du gaz de fluidisation pour le lit fluidisé annulaire (35) sont ajustées de sorte que les nombres Froude de particules dans le tube d'alimentation de gaz (3) soient entre 1 et 100, dans le lit fluidisé annulaire (35) entre 0,02 et 2 et dans la chambre de mixage (7) entre 0,3 et 30.

2. Procédé selon la revendication 1, **caractérisé en ce que** le réacteur (1) est muni en aval d'un deuxième réacteur (9), dans lequel un mélange de gaz chargé de solides est introduit du premier réacteur (1) par-dessous à travers un tube d'alimentation de gaz de préférence central (10) dans une chambre de mixage (19), le tube d'alimentation de gaz (10) étant entouré au moins partiellement par un tube fluidisé annulaire immobile (36) qui est fluidisé en fournissant du gaz de fluidisation.

3. Procédé selon la revendication 1 ou 2, **caractérisé en ce que** le nombre Froude de particules dans le tube d'alimentation de gaz (3, 10) est entre 1,15 et 20, en particulier entre 3,95 et 11,6.

4. Procédé selon l'une quelconque des revendications précédentes, **caractérisé en ce que** le nombre Froude de particules dans le lit fluidisé annulaire (35, 36) est entre 0,11 et 1,15, en particulier entre 0,11 et 0,52.

5. Procédé selon l'une quelconque des revendications précédentes, **caractérisé en ce que** le nombre Froude de particules dans la chambre de mixage (7, 19) est entre 0,37 et 3,7, en particulier entre 0,53 et 1,32.

6. Procédé selon l'une quelconque des revendications précédentes, **caractérisé en ce que** la hauteur de lit de solides dans chaque réacteur (1, 9) est ajustée de sorte que le lit fluidisé annulaire (35, 36) s'étende au-delà de l'extrémité d'orifice supérieur du tube d'alimentation de gaz (3, 10) et **en ce que** les solides sont constamment introduits dans le premier gaz au mélange de gaz et entraînés par le flux de gaz vers la chambre de mixage (7, 19) située au-dessus de la région d'orifice du tube d'alimentation de gaz (3, 10).

7. Procédé selon l'une quelconque des revendications précédentes, **caractérisé en ce qu'**un minerai sulfureux, qui contient de l'or, du zinc, de l'argent, du cuivre, du nickel et/ou du fer, est utilisé comme matériau de départ.

8. Procédé selon l'une quelconque des revendications précédentes, **caractérisé en ce qu'**au moins un réacteur (1, 9) est alimenté en gaz contenant de l'oxygène, par exemple de l'air avec un contenu d'oxygène d'environ 20 % en volume à travers le tube d'alimentation de gaz (3, 10) et/ou dans le lit fluidisé annulaire (35, 36).

9. Procédé selon l'une quelconque des revendications précédentes, **caractérisé en ce que** de la chaleur est fournie ou extraite d'au moins un réacteur (1, 9) dans le lit fluidisé annulaire (35, 36) et/ou dans la chambre de mixage (7, 19).

10. Procédé selon l'une quelconque des revendications précédentes, **caractérisé en ce qu'**il est fourni en aval d'au moins un réacteur (1, 9) un dispositif de refroidissement (20, 21), dans lequel un mélange de gaz chargé de solides en provenance du réacteur (1, 9) est refroidi à une température inférieure à 400°C, en particulier d'environ 380°C.

11. Procédé selon l'une quelconque des revendications précédentes, **caractérisé en ce qu'**il est fourni en aval d'au moins un réacteur (1, 9) un séparateur, par exemple un cyclone (33), duquel les solides séparés des gaz d'échappement sont fournis aux premier et/ou deuxième réacteurs (1, 9) ou à un autre dispositif de refroidissement (26).

12. Procédé selon la revendication 11, **caractérisé en ce qu'**au moins une partie des gaz d'échappement séparés des solides dans le séparateur (23) est fournie aux premier et/ou deuxième réacteurs (1, 9) en tant que gaz de fluidisation, en particulier après le traitement à un étage de nettoyage de gaz en aval, comme un précipitateur (31) et/ou un traitement de gaz humide (32).

13. Procédé selon la revendication 11 ou 12, **caractérisé en ce qu'**au moins une partie des gaz d'échappement séparés des solides dans le séparateur (23) est fournie à une installation (33) pour produire de l'acide sulfurique.

14. Procédé selon l'une quelconque des revendications précédentes, **caractérisé en ce que** des solides de grains grossiers et/ou des résidus grillés sont retirés, en particulier de manière discontinue, du lit fluidisé annulaire (35, 36) des premier et/ou deuxième réacteurs (1, 9) et passés sur un autre dispositif de refroidissement (26).

15. Installation pour le traitement thermique de solides de grains fins, en particulier des minerais sulfureux, en particulier pour effectuer un procédé selon l'une quelconque des revendications 1 à 14, comprenant un réacteur (1) constituant un réacteur de lit fluidisé, dans laquelle le réacteur (1) a un système d'alimentation de gaz avec un distributeur de gaz annulaire (4, 5) et au moins un tube d'alimentation de gaz (3) s'étendant à travers un lit fluidisé annulaire immobile (35) qui entoure au moins partiellement le tube d'alimentation de gaz, **caractérisée en ce que** le niveau du lit fluidisé annulaire (35) est contenu de sorte que les solides s'écoulent au-dessus du bord du tube d'alimentation de gaz (3) et **en ce que** le tube d'alimentation de gaz (3), s'étendant vers le haut sensiblement verticalement à partir de la région inférieure du réacteur (1) dans une chambre de mixage (7) du réacteur (1) est apte à fournir un flux de gaz dirigé verticalement, et de sorte que le gaz s'écoulant à travers le tube d'alimentation de gaz (3) entraîne des solides du lit fluidisé annulaire (35) dans la chambre de mixage (7).

16. Installation selon la revendication 15, **caractérisée en ce que** le réacteur (1) est muni en aval d'un deuxième réacteur (9), qui a un tube d'alimentation de gaz (10), qui est connecté à un conduit de décharge (8) pour des mélanges de gaz chargés de solides fournis à l'extrémité supérieure du premier réacteur (1) et est formé de sorte que le gaz s'écoulant à travers le tube d'alimentation de gaz (10) entraîne des solides d'un lit fluidisé annulaire immobile (36), qui entoure au moins partiellement le tube d'alimentation de gaz (10), dans la chambre de mixage (19).

17. Installation selon la revendication 15 ou 16, **caractérisée en ce que** le tube d'alimentation de gaz (3, 10) est agencé approximativement centralement par rapport à la zone de coupe transversale du réacteur (1).

18. Installation selon la revendication 17, **caractérisée en ce qu'**un séparateur de solides, en particulier un cyclone (23), est fourni en aval du deuxième réacteur (9), pour la séparation de solides, et **en ce que** le séparateur de solides a un conduit de solides (24) conduisant au lit fluidisé annulaire (35, 36) des premier et/ou deuxième réacteurs (1, 9).

19. Installation selon la revendication 17 ou 18, **caractérisée en ce qu'**un dispositif de refroidissement, en particulier une chaudière de chaleur de déchets (21) munie de rangées de tubes de refroidissement (20), est fourni en aval du deuxième réacteur (9).

20. Installation selon l'une quelconque des revendications 17 à 19, **caractérisée en ce que** les éléments de contrôle de température (15, 16), en particulier une chaudière de circulation naturelle avec des éléments de refroidissement et des parois de membranes (17, 18), sont fournis dans les premier et/ou deuxième réacteurs (1, 9).

21. Installation selon l'une quelconque des revendications 17 à 20, **caractérisée en ce qu'**un distributeur de gaz (5, 12) qui divise la chambre annulaire en une région supérieure de lit fluidisé et une chambre inférieure de distributeur de gaz (4, 11) est fourni dans les premier et/ou deuxième réacteurs (1, 9), et **en ce que** la chambre de distributeur de gaz (4, 11) est connectée à un conduit d'alimentation (6, 13) pour fluidiser le gaz.

22. Installation selon l'une quelconque des revendications 18 à 21, **caractérisée en ce que** les premier et/ou deuxième réacteurs (1, 9) ont un conduit d'alimentation qui conduit à la chambre annulaire et est connecté à un conduit de gaz d'échappement du séparateur (23) fourni en aval du deuxième réacteur (9).

23. Installation selon l'une quelconque des revendications 18 à 22, **caractérisée en ce qu'**un dispositif d'élimination de poussière (31, 32) et/ou une installation (33) pour produire de l'acide sulfurique est fourni en aval du séparateur (23).

**EP 1 583 847 B1**

**REFERENCES CITED IN THE DESCRIPTION**

**Patent documents cited in the description**

- DE 19609286 A1
- US 3578798 A